Europäisches Patentamt

European Patent Office

Office européen des brevets

(11) Publication number: **0 401 148**
**A1**

(12) **EUROPEAN PATENT APPLICATION**

(21) Application number: **90600001.3**

(22) Date of filing: **05.01.90**

(51) Int. Cl.5 **B63B 35/79, B63H 16/18**

(30) Priority: **30.05.89 GR 89010354**

(43) Date of publication of application:
**05.12.90 Bulletin 90/49**

(84) Designated Contracting States:
**AT BE CH DE ES FR GB IT LI LU NL SE**

(71) Applicant: **Stefanatos, Dionisios Gerasimou**
**Monemvasias 69 & Chanion**
**GR-14341 N. Philadelphia Attiki(GR)**

(72) Inventor: **Stefanatos, Dionisios Gerasimou**
**Monemvasias 69 & Chanion**
**GR-14341 N. Philadelphia Attiki(GR)**

(54) **Multiform Sea-Bicycle.**

(57) The Multiform Sea-Bicycle is a collapsible re-creation vessel and consists of two rotating floats (1) with the fins (2) and a crank-shaft (3) with two pedals (4).

With specific fins can move on the sea and on a hard ground.

In order for the user to move it while he is seated, he adjust the frame (5) with the rudder (6), the pitchfork (7), the seat (8) and a third float - stable (9) or rotating (1).

For the exercise of our hands we can place the bicycle on the vessel of the windsurf, by using the adaptor (11).

FIG. 2

## MULTIFORM SEA-BICYCLE

The invention refers to a Multiform Sea-Bicycle - a recreation vessel.

The already known Sea-Bicycles consist of one or two voluminous crafts with their propelling system.

The Multiform Sea-Bicycle, according to the present invention, has the characteristic that it is collapsible and instead of a vessel has two pneumatic rotating floats with fins.

According to the type of the fins the starting off can be made both in the sea and from the beach.

In its simplest form, the user is standing. With movements similar to those of the alpine skiing he can turn. The user can move while is seated using a special frame and a third float - stable or rotating. The exercise of the hands is obtained with the fixing of the bicycle -in its simplest form - on the windsurf.

The advantage of this invention is that it is training the hole body in a better way, it permits a great variety in the way of use and it can be carried easily in the luggage compartment of a private car.

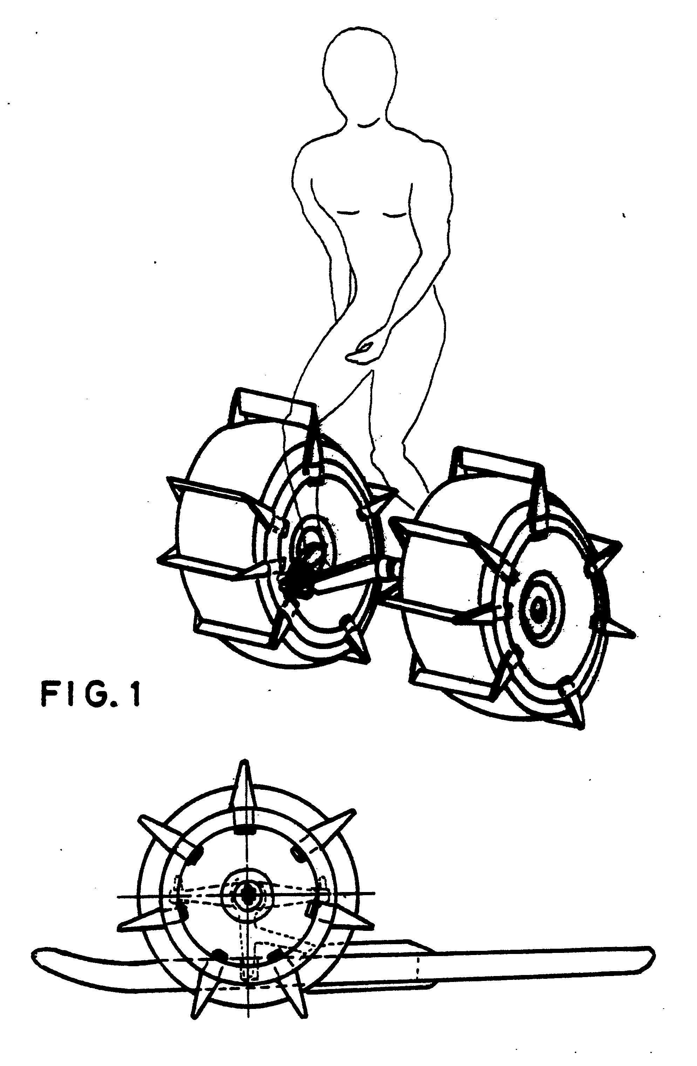

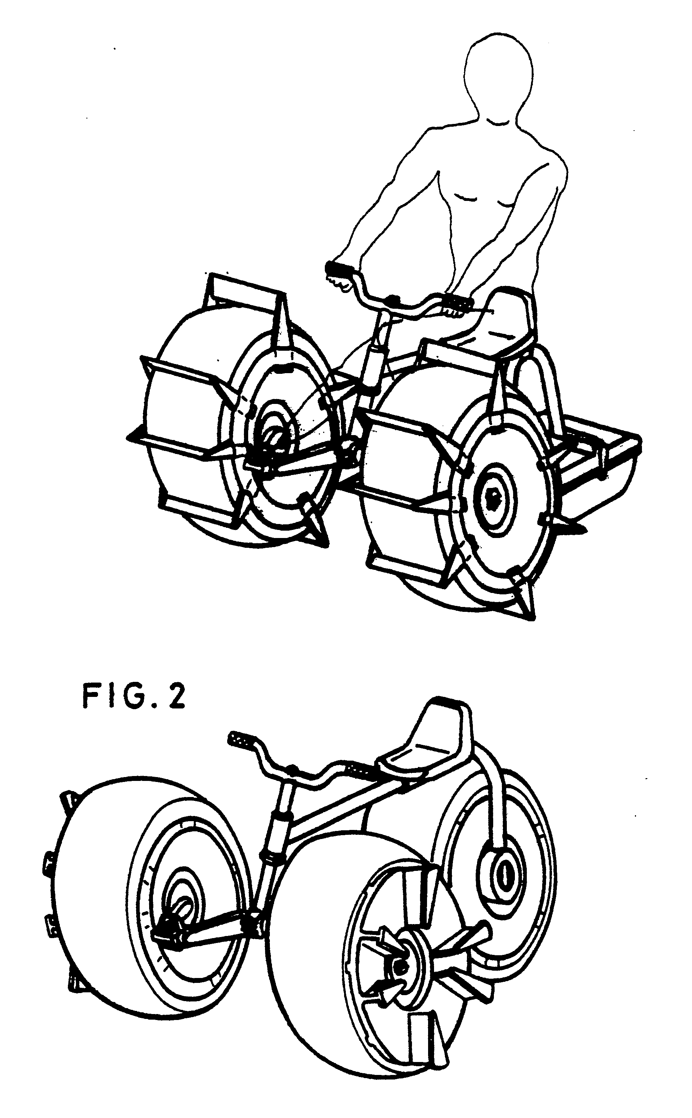

In the figures 1 and 2 there appear the forms of the bicycle accordingly to its use.

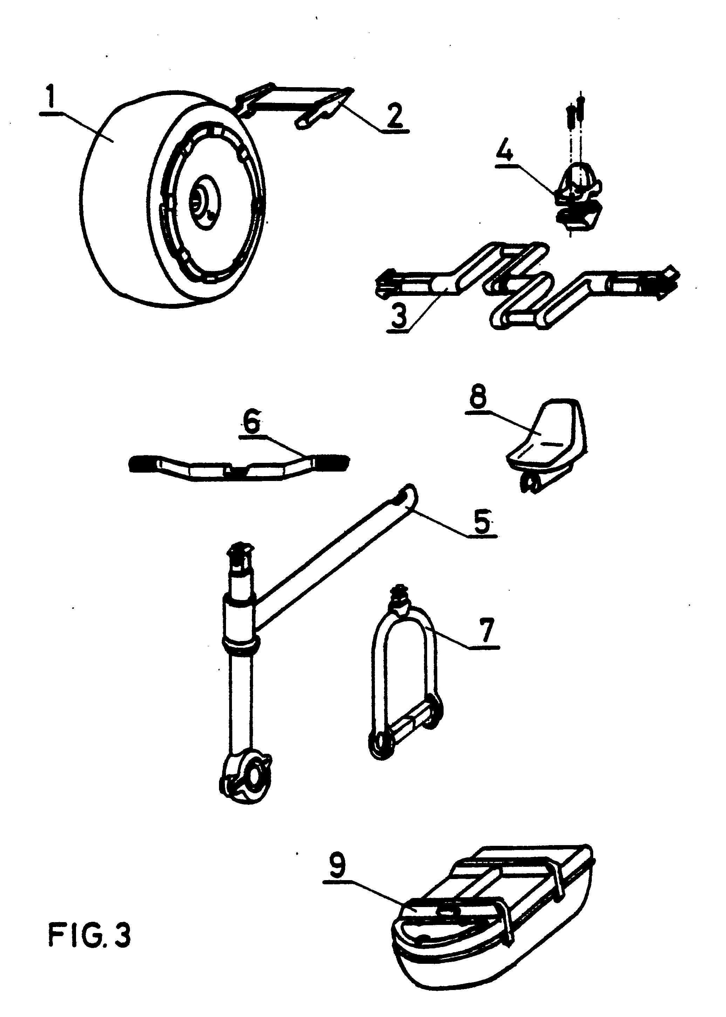

Refering to the figure 3 the bicycle contains two pneumatic rotating floats (1), with the fins (2), one crankshaft (3), two pedals with tying ropes and counter-weights (4), the frame (5), the rudder (6), the pitchfork (7), the seat (8), and the stable float (9) - it is a case too for the storage of the bicycle. In order for the user to move seated on the sand we adjust a rotating float (1) instead of the stable one (9), rotating at the same time the pitchfork at 90°.

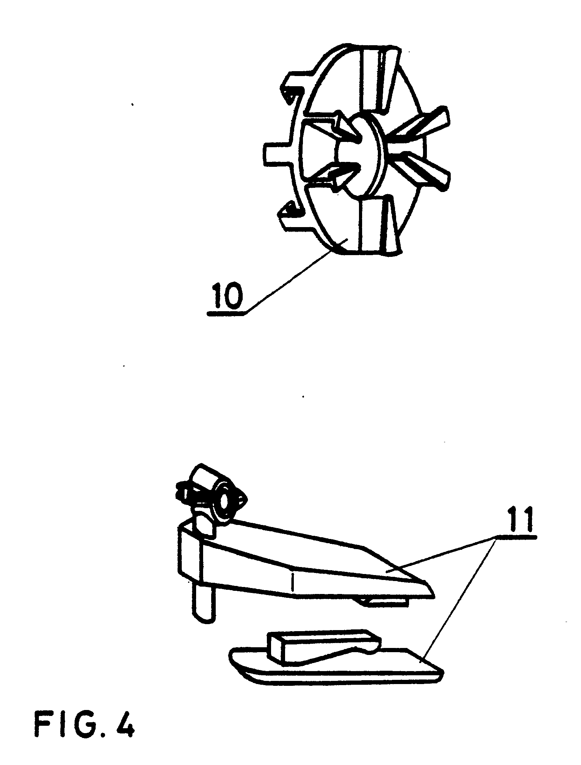

The figure 4 shows the disk with the fins (10) which are adjusted to the front rotating floats - for the movement on the sand, and the adaptor (11) for the vessel of the windsurf.

## Claims

1. The Multiform Sea-Bicycle consists from two rotating floats (1) with their fins (2), the crankshaft (3) and the two pedals (4) with the tying ropes and their counter-weights.

2. The Multiform Sea-Bicycle as claimd in claim 1 disposes one type of fins for the starting off inside the sea (2) and one type which makes possible the movement on the beach(10).

3. The Multiform Sea-Bicycle as claimed in claims 1 and 2 is collapsible.

4. The Multiform sea-biycle as claimed in claim 1 accepts the frame (5) with the rudder (6), the pitchfork (7), the seat (8) and a third float (9).

5. The Maltiform Sea-Bicycle as claimed in claims 1,2 and 4 can accept instead of a stable float (9) a rotating float (1).

6. The stable float (9) as claimed in claim 4 is used as a case for the storage of the bicycle.

7.The Multiform Sea-Bicycle as claimed in claim 1 is placed with a specific adaptor (11) on the vessel of the windsurf.

8. The rotating floets (1) as claimed in claim 1 and 5 may be pneumatic or made of a hard plastic material.

FIG. 1

FIG. 2

FIG.3

10

11

FIG. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-1 122 181 (PENIGAUD)<br>* Whole document *<br>--- | 1,2,3,4,5,8 | B 63 B 35/79<br>B 63 H 16/18 |
| A | DE-A-2 611 443 (ERNST LEISSE)<br>* Page 6, line 14 - page 7, line 17; page 8, line 22 - page 9, line 13; page 14, line 14 - page 16, line 2 *<br>--- | 3,4,6,8 | |
| A | DE-A-3 403 706 (OSKAR CZERWEK)<br>* Page 1, claim 1; page 2, claim 2 *<br>----- | 7 | |

TECHNICAL FIELDS SEARCHED (Int. Cl.5)

B 63 B
B 63 H

The present search report has been drawn up for all claims

| Place of search | Date of completion of the search | Examiner |
|---|---|---|
| THE HAGUE | 19-09-1990 | MARECHAL S. |